# FASCICULE DE BREVET EUROPEEN

(11) **EP 3 199 206 B1**
(45) Date de publication et mention de la délivrance du brevet: **12.12.2018**
(21) Numéro de dépôt: 17150637.1
(22) Date de dépôt: 09.01.2017
(51) Int. Cl.: A62C 2/14, G01M 15/14, G01M 9/04, G01M 15/02, F01D 25/28, A62C 3/08, F02C 7/25

(54) **BANC D'ESSAI DE TURBOMACHINE D'AERONEF**
PRÜFSTAND FÜR TRIEBWERK EINES LUFTFAHRZEUGS
AIRCRAFT TURBINE ENGINE TEST BENCH

(30) Priorité: 28.01.2016 BE 201605072
(43) Date de publication de la demande: 02.08.2017
(73) Titulaire: Safran Aero Boosters SA, 4041 Herstal (BE)
(72) Inventeur: RAIMARCKERS, Nicolas, 4263 Tourinne (Braives) (BE); TACCOGNA, Gaetano, 4690 Bassenge (BE)
(74) Mandataire: Lecomte & Partners

(56) Documents cités:
- DE-A1- 2 342 531
- US-A- 4 432 272
- US-A1- 2011 138 772

## Description

### Domaine technique

L'invention a trait aux essais des turbomachines d'aéronef. Plus précisément, l'invention concerne un banc d'essai adapté pour y étouffer un incendie se déclarant sur le moteur. L'invention propose en outre un procédé d'extinction d'incendie dans un banc d'essai.

### Technique antérieure

Lors de la conception ou de l'entretien d'une turbomachine, tel un turboréacteur, différents tests sont réalisés afin de valider son bon fonctionnement. Ces tests permettent de contrôler la résistance lors de phases de fonctionnement prolongées, en maintenant des régimes, des efforts prédéterminés. Lors de ces tests, une série de mesures est effectuée pour surveiller des paramètres clés. Ces mesures peuvent à la fois s'effectuer directement sur la turbomachine, ou sur son environnement.

Afin de conduire de tels tests, la turbomachine est installée dans un banc d'essai spécifique. Celui-ci est adapté pour recréer des conditions de vol tout en restant au sol. Un tel banc d'essai présente un couloir formant une chambre d'essai recevant la turbomachine. Des cheminées verticales délimitent les extrémités du couloir pour former une entrée et une sortie. Les cheminées reçoivent puis rejettent le flux d'air propulsé par la turbomachine. Des dispositifs réduisent les nuisances sonores inhérentes au fonctionnement de la turbomachine, et qui sont propagées par les cheminées.

Le document de brevet US 2011/0138772 A1 divulgue un banc d'essai de turboréacteur permettant de récupérer l'énergie cinétique produite par les gaz d'échappement du turboréacteur. Le banc d'essai présente une configuration en « U », c'est-à-dire qui montre une cheminée d'entrée et une cheminée de sortie, les cheminées étant reliées par un couloir horizontal contenant la turbomachine.

Pendant un essai, une conduite d'huile ou de carburant peut rompre. Un incendie moteur risque alors de se déclarer. Un tel événement peut dégrader le banc d'essai, et en particulier ses capteurs. Inévitablement, la turbomachine peut elle-même subir de lourds dégâts. Les conséquences d'un tel incident provoquent de lourds dommages, nécessitant ensuite des réparations qui retardent encore la possibilité de réutiliser la turbomachine. Ce scénario devient paradoxal dans le contexte d'une révision, puisqu'un test est censé autoriser le vol d'une turbomachine au lieu d'ajouter de l'attente. De lourdes pertes financières résultent de ces immobilisations au sol.

### Résumé de l'invention

### Problème technique

L'invention a pour objectif de résoudre au moins un des problèmes posés par l'art antérieur. Plus précisément, l'invention a pour objectif de réduire l'impact d'un incendie se déclarant dans le banc d'essai. L'invention a également pour autre objectif de fournir un banc d'essai robuste et fiable.

### Solution technique

L'invention a pour objet un banc d'essai pour moteur, notamment pour turboréacteur ou pour turbopropulseur apte à entraîner un flux d'air, le banc d'essai comprenant : une entrée ; une sortie ; un passage en communication avec l'entrée et la sortie, le passage étant destiné à recevoir le moteur lors des essais ; remarquable en ce que le passage comprend au moins un obturateur pivotant au moins entre une position ouverte, et une position fermée afin de couper une circulation d'air dans le passage ; notamment en cas d'incendie ; et en ce qu'il comprend des moyens de rappel autonomes énergiquement, lesdits moyens étant configurés pour ramener ledit obturateur vers sa position fermée. Selon un mode avantageux de l'invention, l'obturateur comprend un volet ou une série de volets configuré(s) de manière à former une cloison continue apte à obturer le passage en position fermée de l'obturateur.

Selon un mode avantageux de l'invention, l'obturateur comprend au moins une plaque dont la largeur est supérieure à au moins dix fois l'épaisseur, ou au moins vingt fois l'épaisseur.
Selon un mode avantageux de l'invention, dans la position ouverte de l'obturateur, le ou chaque volet est parallèle à l'allongement principal du passage, et/ou dans la position fermée le ou chaque volet est incliné par rapport à l'allongement principal du passage.
Selon un mode avantageux de l'invention, l'axe de pivotement de l'obturateur est horizontal, ou incliné par rapport à la direction verticale, l'obturateur étant équilibré selon son axe de pivotement de manière à être ramené vers la position fermée de manière gravitationnelle, éventuellement l'obturateur comprend un lest.
Selon un mode avantageux de l'invention, les moyens de rappel comprennent des moyens élastiques précontraints de sorte à ramener l'obturateur en position fermée.
Selon un mode avantageux de l'invention, les moyens de rappel comprennent un aimant permanent apte à ramener vers la position fermée et/ou à maintenir en position fermé l'obturateur.
Selon un mode avantageux de l'invention, l'obturateur est destiné à être disposé en aval ou en amont du moteur.
Selon un mode avantageux de l'invention, l'obturateur est un premier obturateur ; le passage comprenant en outre un deuxième obturateur à distance du premier obturateur afin de délimiter un tronçon du passage entre eux ; les deux obturateurs étant aptes à couper la circulation d'air entre l'entrée et la sortie du passage de sorte à pouvoir étouffer un incendie dans le tronçon.
Selon un mode avantageux de l'invention, le banc d'essai comprend un système d'inertage apte à propulser un gaz inerte dans le passage, et/ou des moyens de fixation du moteur placés dans une zone de fixation du moteur, le système d'inertage étant éventuellement disposé dans ladite zone.
Selon un mode avantageux de l'invention, le banc est un banc d'essai pour turboréacteur ou pour turbopropulseur destiné à entraîner un flux d'air traversant le passage, l'obturateur étant apte à être éloigné de la position fermée par le flux d'air lorsque le flux d'air est supérieur à un seuil S, et/ou l'obturateur est configuré de manière à être en position fermée lorsque le flux est inférieur ou égal au seuil S.
Selon un mode avantageux de l'invention, l'obturateur comprend une liaison pivot qui est excentrée par rapport audit obturateur ; préférentiellement en position fermée, l'obturateur présente une moitié supérieure et une moitié inférieure, le pivot étant disposé au niveau de la moitié supérieure.
Selon un mode avantageux de l'invention, en position ouverte, le ou chaque volet est horizontal et/ou à plat.
Selon un mode avantageux de l'invention, en fonctionnement habituel du moteur, l'obturateur est maintenu en position ouverte et/ou le flux d'air entraîné par le moteur exerce sur l'obturateur une pression dynamique supérieure à un seuil S.
Selon un mode avantageux de l'invention, le passage comprend un couloir destiné à recevoir le moteur et/ou des cheminées verticales, l'obturateur étant préférentiellement situé dans le couloir.
Selon un mode avantageux de l'invention, le couloir comprend des moyens de fixation du moteur placé dans une zone de fixation du moteur ; éventuellement munie de capteurs.
Selon un mode avantageux de l'invention, l'obturateur est un premier obturateur situé en amont du moteur, le passage comprenant en outre un deuxième obturateur situé en aval du moteur, les deux obturateurs étant aptes à couper la circulation d'air entre l'entrée et la sortie du passage de sorte à pouvoir étouffer un incendie se déclarant dans le passage au niveau du moteur.
Selon un mode avantageux de l'invention, l'obturateur en amont pivote en position fermée lorsqu'il est exposé à une pression dynamique P1 inférieure à un seuil S1, et en ce que l'obturateur en aval pivote en position fermée lorsqu'il est exposé à une pression dynamique inférieure à un seuil S2, les seuils S1 et S2 étant différents.
Selon un mode avantageux de l'invention, l'obturateur aval se ferme après l'obturateur amont.

Selon un mode avantageux de l'invention, chaque obturateur se ferme progressivement, notamment chaque volet atteint sa position fermée progressivement, et/ou les volets d'un même obturateur atteignent leurs positions fermées les uns après les autres.
Selon un mode avantageux de l'invention, le passage comprend un sens de circulation d'air de l'entrée vers la sortie, éventuellement le sens principal est selon l'axe central du passage.
Selon un mode avantageux de l'invention, le passage comprend des parois en béton armé de treillis métallique, et éventuellement des fondations, par exemple au niveau d'au moins un ou de chaque obturateur.
Selon un mode avantageux de l'invention, le passage et/ou le couloir mesure plus de 10 m de long, préférentiellement plus de 20 m de long, plus préférentiellement plus de 70 m de long. La longueur du couloir peut être mesurée en ligne droite.
Selon un mode avantageux de l'invention, le passage présente une section de passage d'au moins 4m2, ou 25 m2, ou 50 m2, ou 100 m2.
Selon un mode avantageux de l'invention, le banc d'essai comprend un bras de fixation, éventuellement une potence ou une suspente, adaptée à la fixation du moteur.
Selon un mode avantageux de l'invention, le moteur est apte à exercer une poussée supérieure ou égale à 20 kN, ou 80 kN, ou 200 kN, 500 kN. Le bras de fixation étant conçu pour reprendre les efforts correspondants.
Selon un mode avantageux de l'invention, le ou au moins un ou chaque obturateur est monté libre en rotation par rapport au banc d'essai ; et/ou chaque volet est monté libre en rotation par rapport aux autres volets.
Selon un mode avantageux de l'invention, la ou chaque cloison est étanche ou généralement étanche.
Selon un mode avantageux de l'invention, la zone de fixation du moteur comprend des capteurs de mesure, notamment des capteurs de température, ou de pression, ou de mesure de débit.

Selon un mode avantageux de l'invention, dans la position fermée le, ou au moins un, ou chaque volet est généralement perpendiculaire à l'allongement principal du passage.
Selon un mode avantageux de l'invention, le banc d'essai comprend des moyens de maintien de l'obturateur en position ouverte et/ou des moyens de maintien de l'obturateur dans la position fermée

L'invention a également pour objet un banc d'essai pour moteur, notamment pour turboréacteur ou pour turbopropulseur apte à entraîner un flux d'air, le banc d'essai comprenant : une entrée ; une sortie ; un passage en communication avec l'entrée et la sortie, le passage étant destiné à recevoir le moteur lors des essais, remarquable en ce que le passage comprend un obturateur pivotant entre une position ouverte, et une position fermée afin de couper une circulation d'air dans le passage ; notamment en cas d'incendie ; l'obturateur apte à être ramené en position fermée par action de la force gravitationnelle ; et/ou l'obturateur est apte à être éloigné de la position fermée par un flux d'air entraîné par le moteur au travers du passage.

L'invention a également pour objet un procédé d'extinction d'incendie dans un banc d'essai pour moteur, notamment pour turboréacteur ou turbopropulseur, le procédé comprenant les étapes suivantes : (a) réalisation d'un test moteur sur le banc d'essai ; (b) détection d'un incendie ; remarquable en ce que le banc comprend un obturateur pivotant entre une position ouverte et une position fermée ; le procédé comprend en outre une étape (d) pivotement de l'obturateur vers la position fermée de manière autonome énergiquement, éventuellement le banc d'essai est conforme à l'invention.
Selon un mode avantageux de l'invention, le moteur est un turboréacteur ou un turbopropulseur d'avion, et en ce que suite à l'étape (b) détection, le moteur est coupé ; et lors de l'étape (d) pivotement, le moteur continue de tourner de sorte à entrainer un flux d'air qui maintient l'obturateur partiellement ouvert.
Selon un mode avantageux de l'invention, lors de l'étape (d) pivotement, l'obturateur reste partiellement ouvert pendant au moins 1 seconde, préférentiellement pendant au moins 5 secondes, plus préférentiellement au moins 20 secondes, éventuellement pendant au moins 1 minute.
De manière générale, les modes avantageux de chaque objet de l'invention sont également applicables aux autres objets de l'invention. Dans la mesure du possible, chaque objet et chaque mode avantageux sont combinables.

### Avantages apportés

La présence d'un ou plusieurs volets pivotant permet d'améliorer la compacité de l'obturateur et de limiter son impact sur le flux circulant dans le banc d'essai.

En position ouverte ; chaque obturateur est partiellement, préférentiellement totalement inscrit dans le passage, notamment dans le couloir, ce qui permet de l'obturer encore plus vite.

La présence de moyens de rappel entrainant la fermeture de l'obturateur en cas de fonctionnement inhabituel du moteur permet une gestion des incendies rapide, autonome et économe en énergie. Ceci améliore d'ailleurs la fiabilité d'obturation.

Deux obturateurs permettent de confiner une zone réduite, de sorte à favoriser l'asphyxie d'un incendie qui s'y déclencherait. Ils sont placés à proximité du turboréacteur, ce qui permet de supprimer l'oxygène restant dans l'enceinte qu'ils forment. La présence d'un système d'inertage activé par la fermeture des obturateurs accélère la gestion de l'incendie.

En raison de l'inertie du rotor d'un turboréacteur d'avion, le flux d'air continue d'être entraîné malgré la coupure de l'alimentation en énergie. Puisque les volets restent partiellement ouverts lorsque le flux continue de circuler au-delà d'un certain seuil, ils peuvent être dimensionnés de manière plus légère. En effet, ils n'ont pas besoin de rester fermés en résistant à un flux élevé de la turbomachine. Ainsi, l'obturateur peut être aminci, si bien qu'il perturbe à minima le test.

### Brève description des dessins

La figure 1 représente un banc d'essai selon l'invention recevant un moteur en phase de test.
La figure 2 est un schéma d'un obturateur amont en position ouverte selon l'invention, un incendie venant de se déclarer.
La figure 3 est un schéma de l'obturateur amont en cours de fermeture selon l'invention, en réponse à un départ d'incendie.
La figure 4 est un schéma d'un obturateur amont en position fermée selon l'invention.
La figure 5 illustre un diagramme du procédé d'extinction d'incendie dans un banc d'essai selon l'invention.

### Description des modes de réalisation

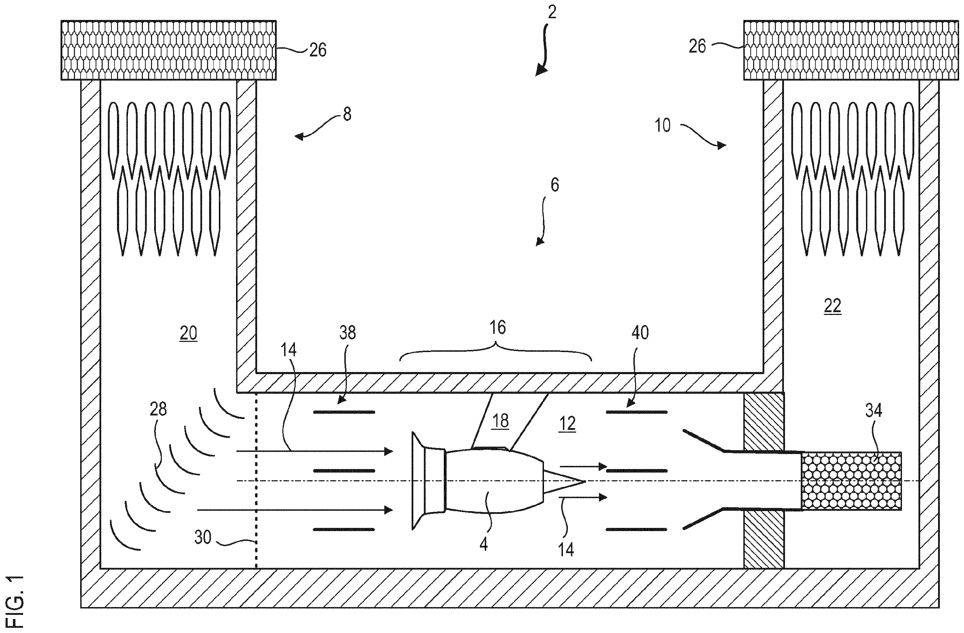

La figure 1 représente de manière simplifiée un banc d'essai 2 de moteur 4, plus particulièrement un banc d'essai 2 pour turbomachine 4, notamment pour turboréacteur 4 d'avion.
Le banc d'essai 2 forme une infrastructure, une construction. Il comprend un passage 6 avec une entrée 8 et une sortie 10. Le passage 6 peut comprendre un couloir 12 essentiellement allongé. Sa longueur peut être supérieure à 50 m. La longueur du couloir 12 permet la circulation en ligne droite d'un flux d'air 14 ou circulation d'air 14 traversant la passage 6. Ce flux d'air 14 circule au travers du banc d'essai 2 en raison du souffle du turboréacteur 4. Afin de limiter la résistance à l'écoulement, en particulier l'entrée d'un flux d'air 14 dans le turboréacteur 4, le couloir 12 peut présenter une section de passage supérieure ou égale à 50 m2. La section de passage, ou section libre, peut être mesurée en amont de la zone de fixation 16 destinée à recevoir le turboréacteur 4. La zone de fixation 16 peut être un tronçon du couloir 12 selon sa longueur. La section de passage peut être observable sur au moins un quart de la longueur du couloir 12, préférentiellement sur la majorité de la longueur.
La zone de fixation 16, est éventuellement munie d'un bras de fixation 18, où le turboréacteur 4 est monté. Le bras 18 peut s'étendre verticalement depuis le plafond du couloir 12, à la manière d'une colonne ou d'un poteau. Le bras 18 permet de monter le turboréacteur 4 avec un déport, et de centrer ce dernier au milieu du couloir 12. Le centrage est vertical et horizontal.

Le couloir 12 peut être délimité par des cheminées verticales (20 ; 22) en entrée 8 et en sortie 10. Elles permettent une admission d'air et un échappement verticaux, en élévation par rapport au couloir 12. La configuration en « U » détaillée ici n'est pas indispensable ; d'autres configurations, par exemple sans cheminées, sont envisageables. Seule une chambre peut former le passage.
A la jonction entre la cheminée amont 20 et le couloir 12, le banc 2 est équipé d'une série de lames de déviation 28. Elles permettent de renvoyer l'air descendant de la cheminée d'entrée 20 selon la direction horizontale. Les lames de déviation 28 s'étendent horizontalement, et traversent tout le couloir 12. Elles présentent des profils courbes. En entrée du couloir 12, le banc 2 présente optionnellement une grille 30 permettant d'intercepter des débris susceptibles de perturber l'essai et d'endommager le turboréacteur.
Le banc d'essai 2 est ici représenté en condition normale de test, de manière habituelle. Toutefois, pour prendre en compte le risque d'incendie au niveau du turboréacteur 4, le banc d'essai 2 est doté d'obturateurs (38 ; 40). En particulier, un premier obturateur amont 38 est placé en amont du moteur 4, tandis qu'un deuxième obturateur 40 est placé en aval. Chaque obturateur (38 ; 40) présente un jeu de volets répartis au travers du passage 6, et qui sont distants les uns des autres en position ouverte.

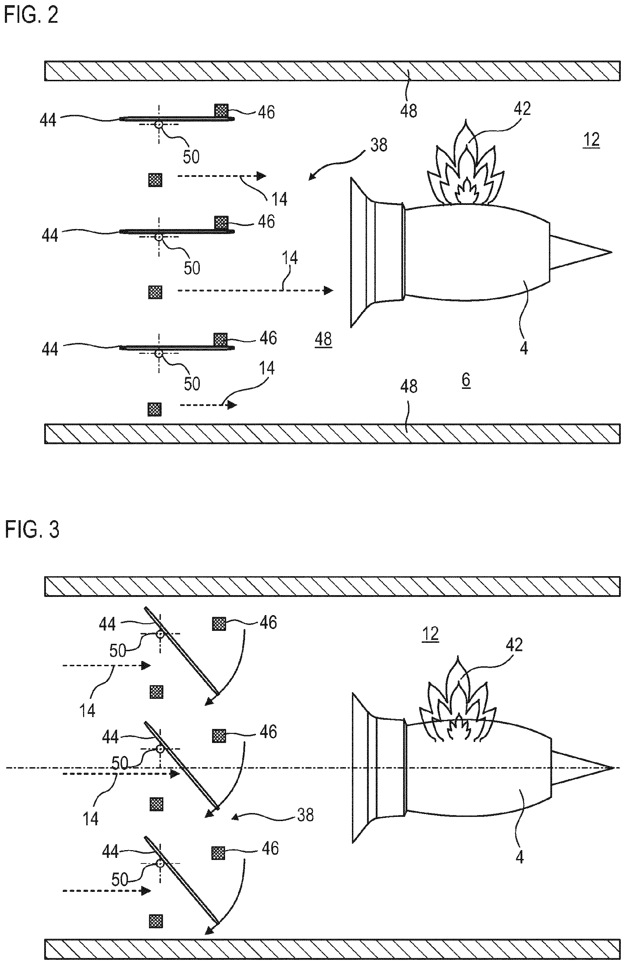

La figure 2 est une portion du banc d'essai incluant le moteur 4 et un obturateur, par exemple l'obturateur amont 38. Ce dernier est ici en position ouverte. Une portion de couloir 12 du passage 6 y est représentée. Un incendie 42 vient de se déclarer sur le moteur 4, ce qui correspond à un fonctionnement inhabituel, anormal du banc d'essai.
L'obturateur 38 comprend plusieurs volets 44. Les volets 44 comprennent chacun une liaison pivot 50 avec un axe de pivotement horizontal. Les volets 44 sont parallèles à un même plan et sont espacés entre eux afin de permettre le passage du flux d'air 14. Ici, 3 volets sont représentés, néanmoins tout autre nombre est envisageable, par exemple dix ou quinze ou vingt sur un même obturateur 38. Les volets 44 peuvent montrer des formes de plaques, par exemples rectangulaires.

Des premiers moyens de verrouillage 46 peuvent maintenir chaque obturateur en position ouverte. Les volets 44 peuvent être parallèles au plafond 48 et au sol 48 du couloir 12. Le plafond 48 et le sol 48 forment des parois délimitant le couloir 12 et donc le passage 6. Ils sont joints par des parois verticales 48, également appelées parois latérales 48, de manière à entourer le couloir 12 et donc le passage 6. Les premiers moyens de verrouillage 46 peuvent être disposés sur les parois verticales 48. Les pivots 50 sont placés en moitié amont des volets 44 de sorte à favoriser leur basculement lors de la libération des premiers moyens de verrouillage 46.
La figure 3 illustre la portion de banc d'essai de la figure 2 après que les premiers moyens de verrouillage 46 aient été déverrouillés. En parallèle, le moteur 4 est coupé.
En réponse à la détection de l'incendie 42, les premiers moyens de verrouillage 46 ont libéré les volets 44 laissant libres ces derniers. En raison du déséquilibre entre leurs moitiés amont et leurs moitiés aval par rapport aux pivots 50 respectifs, les volets 44 basculent. Ils sont inclinés par rapport à la position précédente. Leurs extrémités inférieures se rapprochent du volet 44 du dessous. Ce mouvement de pivotement se produit sous l'effet de la gravité, cette force gravitationnelle formant un moyen de rappel. Ainsi, le déplacement des volets 44 vers la position fermée est libre de source d'énergie. Les volets 44 se déplacent de manière autonome en terme d'énergie motrice. Ceci simplifie la conception des volets 44 et offre un gain de fiabilité.
Cependant, l'autorotation du moteur 4 continue d'entrainer le flux d'air 14. Ce dernier exerce un effort mécanique contre l'obturateur 38, et notamment contre les volets 44. Cet effort mécanique s'oppose à la fermeture complète de l'obturateur 38, qui reste dans une position de fermeture partielle. La pression dynamique du flux d'air 14 peut être exploitée. Les volets 44 restent à distance les uns des autres puisqu'ils sont poussés par le flux d'air 14. Tant que le flux d'air 14 reste supérieur à un seuil S, l'obturateur 38 reste partiellement ouvert. Ce seuil S peut dépendre de l'équilibrage des volets 44, et/ou de leurs profils aérodynamiques. Des moyens élastiques de rappel (non représentés) peuvent être ajoutés ou peuvent remplacer le désaxage des pivots 50. Ces moyens élastiques augmentent la valeur seuil S.

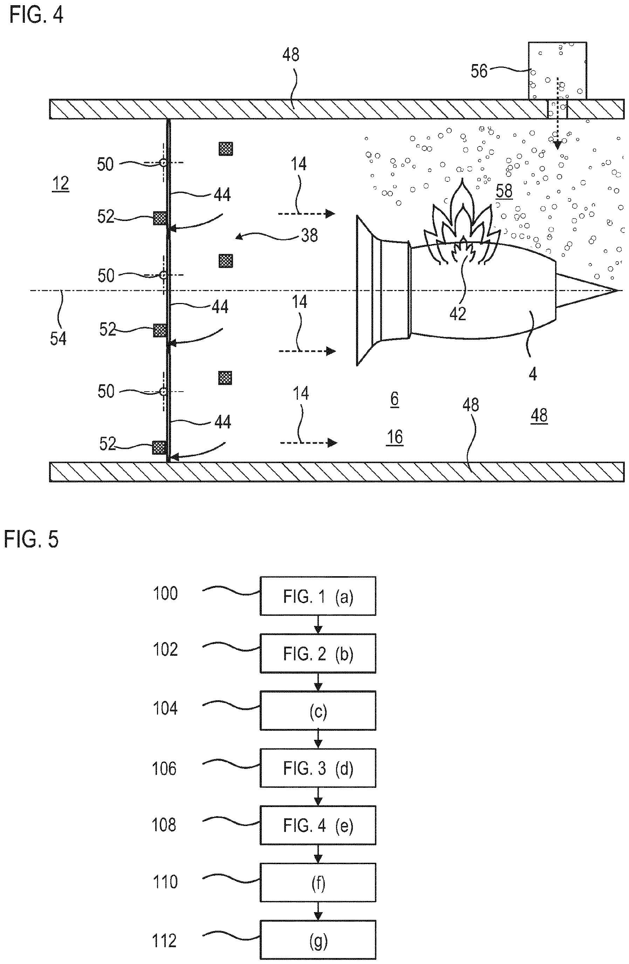

La figure 4 présente l'obturateur amont 38 en configuration fermée. Cette figure présente la portion de banc d'essai détaillée en relation avec les figures 1 à 3.
A présent, le flux d'air 14 est inférieur ou égal au seuil S, si bien que son effort mécanique sur l'obturateur 38 est inférieur à l'effort qu'exercent les moyens de rappel. L'obturateur 38 continue de baisser. Les volets 44 comprenant chacun une liaison pivot 50 continuent de pivoter vers le bas jusqu'à venir en contact les uns des autres. Ils peuvent se toucher, et éventuellement buter les uns contre les autres, par exemple au niveau de leurs bords supérieurs et de leurs bords inférieurs. Des deuxièmes moyens de verrouillage 52 peuvent maintenir chaque volet 44 en position fermée.
Les volets 44 sont verticaux et forment une cloison à la fois étanche et continue. Ils peuvent venir en contact de la paroi supérieure 48 et de la paroi inférieure 48. Ils peuvent racler de manière étanche les parois verticales 48. La cloison résultante obture le passage 6 de manière généralement étanche. La circulation du flux d'air 14 au travers du couloir 12 est coupée.
Puisque le flux d'air 14 peut montrer une distribution variable en fonction de la proximité des parois 48 et de l'axe central 54 du couloir 12, l'effort du flux d'air 14 peut également varier selon les volets 44. Ainsi, les volets 44 peuvent gagner leurs positions fermées les uns après les autres. Par exemple, les volets proches des cloisons peuvent se fermer avant ceux au niveau de l'axe du moteur 4, cet axe pouvant correspondre à l'axe central 54 du couloir 12.
Une fois confinée, la zone de fixation 16 moteur est rendue inerte. Le banc d'essai peut comporter un système d'inertage 56 apte à propulser un gaz inerte 58 dans le passage 6. Ceci combat l'incendie et permet de l'éteindre.
Ce qui a été décrit en relation avec l'obturateur amont peut également s'appliquer à l'obturateur aval.
La figure 5 présente un diagramme du procédé d'extinction d'un incendie dans un banc d'essai. Le banc d'essai peut être identique à celui présenté en relation avec les figures 1 à 4.

Le procédé peut prendre les étapes suivantes, éventuellement effectuées dans l'ordre qui suit :
(a)- réalisation d'un test 100 moteur dans le passage du banc d'essai, chaque obturateur étant alors en position ouverte ;
(b)- détection 102 d'un incendie sur le moteur ;
(c)- déverrouillage 104 des obturateurs afin d'autoriser leur pivotement ;
(d)- pivotement 106 de chaque obturateur vers sa position fermée respective à l'aide des moyens de rappel ;
(e)- obturateurs en position fermée 108;
(f)- verrouillage 110 des obturateurs en position fermée ;
(g)- inertage 112 de la zone au niveau du moteur afin d'y éteindre l'incendie.

Lors de l'étape (a) réalisation d'un test 100, le moteur peut être un turboréacteur d'avion, par exemple apte à créer une poussée d'au moins 120 kN. Cette poussée résulte de l'entrainement du flux d'air au travers du passage du banc d'essai. Le flux d'air exerce un effort mécanique contre chaque obturateur présent dans le passage.
Dès qu'un incendie est détecté lors de l'étape (b) détection 102, le moteur est coupé. Il n'est plus alimenté en énergie ; soit en carburant. Mais l'inertie de son rotor, conjuguée à sa vitesse de rotation lors du test, continue de faire tourner sa soufflante si bien que le flux d'air continue d'être entraîné au travers du passage. En conséquence de quoi, les obturateurs continuent d'être soumis à une poussée liée au flux d'air.
Lors de l'étape (d) pivotement 106, chaque obturateur pivote vers sa position fermée. Ce mouvement est entraîné par les moyens de rappel. La gravitation peut permettre de descendre les obturateurs. Ils sont alors essentiellement montés libre en rotation. En complément ou en alternative, des aimants permanents et/ou des ressorts peuvent équiper les obturateurs pour rabattre les volets vers la position fermée.
En raison de la persistance du flux d'air, le mouvement de fermeture des obturateurs est limité. Le mouvement est contraint si bien que les obturateurs restent en équilibre à distance de leur position fermée tant que le flux d'air reste supérieur à un seuil S.
Lors de l'étape (d) pivotement, l'obturateur reste partiellement ouvert pendant au moins 1 seconde, préférentiellement pendant au moins 5 secondes, plus préférentiellement au moins 20 secondes, éventuellement pendant au moins 1 minute.
A l'étape (e) obturateur(s) en position fermée 108, le flux d'air est devenu inférieur ou égal au seuil S. Dès lors, l'action mécanique des moyens de rappel est suffisamment élevée pour amener chaque obturateur en position fermée. Le flux poussé par le moteur n'est plus suffisant pour écarter les obturateurs de leur position fermée. Les obturateurs peuvent se fermer en décalé dans le temps.
Ensuite, les obturateurs peuvent optionnellement être verrouillés en place afin de les maintenir en position fermée lors de l'étape verrouillage (f). Toutefois cette étape est optionnelle. Le simple contact entre les volets peut suffire à assurer une étanchéité suffisante. Par ailleurs, la présence d'aimants aux extrémités supérieures et inférieures des volets peut les bloquer en position fermée. Cette action magnétique permet également d'augmenter le seuil S. Une fois que l'espace recevant le moteur est confiné, c'est-à-dire fermé de manière étanche, il peut être rendu inerte. L'air ne s'y renouvelle plus. Selon une autre approche, un gaz inerte y est injecté afin d'asphyxier l'incendie. Ce gaz inerte pressurisé chasse l'oxygène restant. L'oxygène peut être aspiré ou s'évacuer moyennant une fuite contrôlée au travers des obturateurs. D'autres méthodes d'extinction sont possibles, comme une aspersion.

## Revendications

1. Banc d'essai (2) pour moteur (4), notamment pour turboréacteur ou pour turbopropulseur apte à entraîner un flux d'air (14), le banc d'essai (2) comprenant :
- une entrée (8);
- une sortie (10);
- un passage (6) en communication avec l'entrée (8) et la sortie (10), le passage (6) étant destiné à recevoir le moteur (4) lors des essais,
**caractérisé en ce que** le passage (6) comprend au moins un obturateur pivotant (38 ; 40) au moins entre une position ouverte, et une position fermée afin de couper une circulation d'air dans le passage (6); notamment en cas d'incendie (42) ;
et **en ce qu'**il comprend des moyens de rappel autonomes énergiquement, lesdits moyens étant configurés pour ramener ledit obturateur (38 ; 40) vers sa position fermée.

2. Banc (2) selon la revendication 1, **caractérisé en ce que** l'obturateur (38 ; 40) comprend un volet (44) ou une série de volets (44) configuré(s) de manière à former une cloison continue apte à obturer le passage (6) en position fermée de l'obturateur (38 ; 40).

3. Banc (2) selon l'une des revendications 1 à 2, **caractérisé en ce que** l'obturateur (38 ; 40) comprend au moins une plaque (44) dont la largeur est supérieure à au moins dix fois l'épaisseur, ou au moins vingt fois l'épaisseur.

4. Banc (2) selon l'une des revendications 2 à 3, **caractérisé en ce que** dans la position ouverte de l'obturateur (38 ; 40), le ou chaque volet (44) est parallèle à l'allongement principal du passage (6), et/ou dans la position fermée le ou chaque volet (44) est incliné par rapport à l'allongement principal du passage (6).

5. Banc (2) selon l'une des revendications 1 à 4, caractérisé en que l'axe de pivotement de l'obturateur (38 ; 40) est horizontal, ou incliné par rapport à la direction verticale, l'obturateur (38 ; 40) étant équilibré selon son axe de pivotement de manière à être ramené vers la position fermée de manière gravitationnelle, éventuellement l'obturateur (38 ; 40) comprend un lest.

6. Banc (2) selon l'une des revendications 1 à 5, **caractérisé en ce que** les moyens de rappel comprennent des moyens élastiques précontraints de sorte à ramener l'obturateur (38 ; 40) en position fermée.

7. Banc (2) selon l'une des revendications 1 à 6, **caractérisé en ce que** les moyens de rappel comprennent un aimant permanent apte à ramener vers la position fermée et/ou à maintenir en position fermée l'obturateur (38 ; 40).

8. Banc (2) selon l'une des revendications 1 à 7, caractérisé en que l'obturateur est destiné à être disposé en aval ou en amont du moteur (4).

9. Banc (2) selon l'une des revendications 1 à 8, caractérisé en que l'obturateur est un premier obturateur (38); le passage (6) comprenant en outre un deuxième obturateur (40) à distance du premier obturateur (38) afin de délimiter un tronçon (16) du passage (6) entre eux ; les deux obturateurs (38 ; 40) étant aptes à couper la circulation d'air entre l'entrée (8) et la sortie (10) du passage (6) de sorte à pouvoir étouffer un incendie (42) dans le tronçon (16).

10. Banc (2) selon l'une des revendications 1 à 9, **caractérisé en ce qu'**il comprend un système d'inertage (56) apte à propulser un gaz inerte (58) dans le passage (6), et/ou des moyens de fixation (18) du moteur (4) placés dans une zone de fixation (16) du moteur (4), le système d'inertage (56) étant éventuellement disposé dans ladite zone (16).

11. Banc (2) selon l'une des revendications 1 à 10, **caractérisé en ce qu'**il est un banc d'essai (2) pour turboréacteur ou pour turbopropulseur destiné à entraîner un flux d'air (14) traversant le passage (6), l'obturateur (38 ; 40) étant apte à être éloigné de la position fermée par le flux d'air (14) lorsque le flux d'air (14) est supérieur à un seuil S, et/ou l'obturateur (38 ; 40) est configuré de manière à être en position fermée lorsque le flux (14) est inférieur ou égal au seuil S.

12. Banc (2) selon l'une des revendications 1 à 11, **caractérisé en ce que** l'obturateur (38 ; 40) comprend une liaison pivot (50) qui est excentrée par rapport audit obturateur (38 ; 40); préférentiellement en position fermée, l'obturateur (38 ; 40) présente une moitié supérieure et une moitié inférieure, le pivot (50) étant disposé au niveau de la moitié supérieure.

13. Procédé d'extinction d'incendie dans un banc d'essai (2) pour moteur (4), notamment pour turboréacteur ou turbopropulseur, le procédé comprenant les étapes suivantes :
(a) réalisation (100) d'un test moteur (4) sur le banc d'essai (2) ;
(b) détection (102) d'un incendie ;
**caractérisé en ce que** le banc (2) comprend un obturateur (38 ; 40) pivotant entre une position ouverte et une position fermée ;
le procédé comprend en outre une étape
(d) pivotement (106) de l'obturateur (38; 40) vers la position fermée de manière autonome énergiquement, éventuellement le banc d'essai (2) est selon l'une quelconque des revendications 1 à 12.

14. Procédé selon la revendication 13, **caractérisé en ce que** le moteur (4) est un turboréacteur ou un turbopropulseur d'avion, et **en ce que** suite à l'étape (b) détection (102), le moteur (4) est coupé ; et lors de l'étape (d) pivotement (106), le moteur (4) continue de tourner de sorte à entrainer un flux d'air (14) qui maintient l'obturateur (38 ; 40) partiellement ouvert.

15. Procédé selon l'une des revendications 13 à 14, **caractérisé en ce que** lors de l'étape (d) pivotement, l'obturateur (38 ; 40) reste partiellement ouvert pendant au moins 1 seconde, préférentiellement pendant au moins 5 secondes, plus préférentiellement au moins 20 secondes, éventuellement pendant au moins 1 minute.

## Patentansprüche

1. Prüfstand (2) für ein Triebwerk (4), insbesondere für ein Turbostrohltriebwerk oder Turboproptriebwerk, das fähig ist, einen Luftstrom (14) anzutreiben, wobei der Prüfstand (2) umfasst:
- einen Einlass (8);
- einen Auslass (10);
- einen Durchgang (6), der mit dem Einlass (8) und dem Auslass (10) kommuniziert, wobei der Durchgang (6) dazu bestimmt ist, das Triebwerk (4) während der Tests aufzunehmen,
**dadurch gekennzeichnet, dass** der Durchgang (6) mindestens eine Verschlussvorrichtung (38; 40) umfasst, die mindestens zwischen einer offenen Position und einer geschlossenen Position schwenkt, um eine Zirkulation von Luft in dem Durchgang (6) abzuschließen; insbesondere im Fall eines Feuers (42);
und dadurch, dass er energetisch autonome Rückstellmittel umfasst, wobei die Mittel dafür ausgelegt sind, die Verschlussvorrichtung (38; 40) in ihre geschlossene Position zurückzustellen.

2. Stand (2) nach Anspruch 1, **dadurch gekennzeichnet, dass** die Verschlussvorrichtung (38; 40) eine Klappe (44) oder eine Serie von Klappen (44) umfasst, die so ausgelegt sind, dass sie eine kontinuierliche Trennwand bilden, die fähig ist, den Durchgang (6) in der geschlossenen Position der Verschlussvorrichtung (38; 40) zu verschließen.

3. Stand (2) nach einem der Ansprüche 1 bis 2, **dadurch gekennzeichnet, dass** die Verschlussvorrichtung (38; 40) mindestens eine Platte (44) umfasst, deren Breite größer ist als mindestens zehn Mal ihre Dicke, oder mindestens zwanzig Mal ihre Dicke.

4. Stand (2) nach einem der Ansprüche 2 bis 3, **dadurch gekennzeichnet, dass**, in der offenen Position der Verschlussvorrichtung (38; 40), die Klappe oder jede Klappe (44) sich parallel zu der hauptsächlichen Ausdehnung des Durchgangs (6) befindet, und/oder in der geschlossenen Position die Klappe oder jede Klappe (44) bezüglich der hauptsächlichen Ausdehnung des Durchgangs (6) geneigt ist.

5. Stand (2) nach einem der Ansprüche 1 bis 4, **dadurch gekennzeichnet, dass** die Schwenkachse der Verschlussvorrichtung (38; 40) horizontal oder geneigt bezüglich der vertikalen Richtung ist, wobei die Verschlussvorrichtung (38; 40) entlang ihrer Schwenkachse ausbalanciert ist, sodass sie durch Schwerkraftwirkung in die geschlossene Position zurückgestellt wird, wobei die Verschlussvorrichtung (38; 40) eventuell einen Ballast beinhaltet.

6. Stand (2) nach einem der Ansprüche 1 bis 5, **dadurch gekennzeichnet, dass** die Rückstellmittel vorgespannte elastische Mittel umfassen, um die Verschlussvorrichtung (38; 40) in die geschlossene Position zurückzustellen.

7. Stand (2) nach einem der Ansprüche 1 bis 6, **dadurch gekennzeichnet, dass** die Rückstellmittel einen Permanentmagneten umfassen, der fähig ist, die Verschlussvorrichtung (38; 40) in die geschlossene Position zurückzustellen und/oder sie in der geschlossenen Position zu halten.

8. Stand (2) nach einem der Ansprüche 1 bis 7, **dadurch gekennzeichnet, dass** die Verschlussvorrichtung dazu bestimmt ist, stromabwärts oder stromaufwärts von dem Triebwerk (4) angeordnet zu werden.

9. Stand (2) nach einem der Ansprüche 1 bis 8, **dadurch gekennzeichnet, dass** die Verschlussvorrichtung eine erste Verschlussvorrichtung (38) ist; wobei der Durchgang (6) weiter eine von der ersten Verschlussvorrichtung (38) beabstandete zweite Verschlussvorrichtung (40) umfasst, um einen Abschnitt (16) des Durchgangs (6) zwischen ihnen zu begrenzen; wobei die zwei Verschlussvorrichtungen (38; 40) fähig sind, die Zirkulation von Luft zwischen dem Einlass (8) und dem Auslass (10) des Durchgangs (6) abzuschneiden, um ein Feuer (42) in dem Abschnitt (16) ersticken zu können.

10. Stand (2) nach einem der Ansprüche 1 bis 9, **dadurch gekennzeichnet, dass** er ein Inertisierungssystem (56), das fähig ist, ein inertes Gas (58) in den Durchgang (6) zu treiben, und/oder Fixiermittel (18) für das Triebwerk (4), die sich in einer Fixierzone (16) für das Triebwerk (4) befinden, umfasst, wobei das Inertisierungssystem (56) eventuell in der Zone (16) angeordnet ist.

11. Stand (2) nach einem der Ansprüche 1 bis 10, **dadurch gekennzeichnet, dass** er ein Teststand (2) für ein Turbostrahltriebwerk oder Turboproptriebwerk ist, das dazu bestimmt ist, einen durch den Durchgang (6) passierenden Luftstrom (14) anzutreiben, wobei die Verschlussvorrichtung (38; 40) fähig ist, durch den Luftstrom (14) aus der geschlossenen Position bewegt zu werden, wenn der Luftstrom (14) größer als ein Schwellenwert S ist, und/oder die Verschlussvorrichtung (38; 40) so ausgelegt ist, dass sie sich in der geschlossenen Position befindet, wenn der Strom (14) kleiner oder gleich dem Schwellenwert S ist.

12. Stand (2) nach einem der Ansprüche 1 bis 11, **dadurch gekennzeichnet, dass** die Verschlussvorrichtung (38; 40) eine Schwenkverbindung (50) umfasst, die bezüglich der Verschlussvorrichtung (38; 40) exzentrisch ist; bevorzugt weist, in der geschlossenen Position, die Verschlussvorrichtung (38; 40) eine obere Hälfte und eine untere Hälfte auf, wobei der Schwenkzapfen (50) an der oberen Hälfte angeordnet ist.

13. Verfahren zum Löschen eines Feuers in einem Prüfstand (2) für ein Triebwerk (4), insbesondere für ein Turbostrahltriebwerk oder Turboproptriebwerk, wobei das Verfahren die folgenden Schritte umfasst:
(a) Durchführung (100) eines Triebwerk(4)-Tests in dem Prüfstand (2);
(b) Detektion (102) eines Feuers;
**dadurch gekennzeichnet, dass** der Stand (2) eine Verschlussvorrichtung (38; 40) beinhaltet, die zwischen einer offenen Position und einer geschlossenen Position schwenkt;
wobei das Verfahren weiter einen Schritt umfasst des
(d) Schwenkens (106) der Verschlussvorrichtung (38; 40) in die geschlossene Position auf eine energetisch autonome Weise, wobei der Prüfstand (2) eventuell gemäß einem der Ansprüche 1 bis 12 ist.

14. Verfahren nach Anspruch 13, **dadurch gekennzeichnet, dass** das Triebwerk (4) ein Flugzeug-Turbostrahltriebwerk oder - Turboproptriebwerk ist, und dass, nachfolgend an Schritt (b) der Detektion (102), das Triebwerk (4) abgeschaltet wird; und dass während Schritt (d) des Schwenkens (106) das Triebwerk (4) weiterläuft, um einen Luftstrom (14) anzutreiben, der die Verschlussvorrichtung (38; 40) teilweise offen hält.

15. Verfahren nach einem der Ansprüche 13 bis 14, **dadurch gekennzeichnet, dass** während Schritt (d) des Schwenkens die Verschlussvorrichtung (38; 40) für mindestens 1 Sekunde, bevorzugt für mindestens 5 Sekunden, bevorzugter mindestens 20 Sekunden, eventuell für mindestens 1 Minute, teilweise offen bleibt.

## Claims

1. Test cell (2) for an engine (4), in particular for a turbojet or turboprop able to drive an air flow (14), the test cell (2) comprising:
- an inlet (8);
- an outlet (10);
- a passageway (6) communicating with the inlet (8) and the outlet (10), the passageway (6) being intended to accommodate the engine (4) during the tests,
**characterized in that** the passageway (6) includes at least one shutter (38; 40) pivoting at least between an open position and a closed position in order to cut off a circulation of air in the passageway (6); in particular in the event of a fire (42);
and **in that** it includes return means, energetically autonomous, said means being configured for returning said shutter (38; 40) towards its closed position.

2. Cell (2) according to claim 1, **characterized in that** the shutter (38; 40) includes a flap (44) or a series of flaps (44) configured so as to form a continuous bulkhead able to close the passageway (6) with the shutter (38; 40) in the closed position.

3. Cell (2) according to one of claims 1 to 2, **characterized in that** the shutter (38; 40) includes at least one plate (44), the width of which is greater than at least ten times its thickness, or at least twenty times its thickness.

4. Cell (2) according to one of claims 2 to 3, **characterized in that**, with the shutter (38; 40) in the open position, the flap or each flap (44) is parallel to the main elongation of the passageway (6), and/or in the closed position, the flap or each flap (44) is inclined relative to the main elongation of the passageway (6).

5. Cell (2) according to one of claims 1 to 4, **characterized in that** the pivot axis of the shutter (38; 40) is horizontal or inclined relative to the vertical direction, the shutter (38; 40) being balanced along its pivot axis so as to be returned towards the closed position in a gravitational manner, the shutter (38; 40) possibly including a ballast.

6. Cell (2) according to one of claims 1 to 5, **characterized in that** the return means comprise pre-tensioned elastic means so as to return the shutter (38; 40) to the closed position.

7. Cell (2) according to one of claims 1 to 6, **characterized in that** the return means comprise a permanent magnet able to return the shutter (38; 40) towards the closed position and/or to hold it in the closed position.

8. Cell (2) according to one of claims 1 to 7, **characterized in that** the shutter is intended to be placed downstream or upstream of the engine (4).

9. Cell (2) according to one of claims 1 to 8, **characterized in that** the shutter is a first shutter (38); the passageway (6) furthermore including a second shutter (40) distanced from the first shutter (38) in order to delimit a section (16) of the passageway (6) between them; the two shutters (38; 40) being able to cut off the circulation of air between the inlet (8) and the outlet (10) of the passageway (6) so as to be able to stifle a fire (42) in the section (16).

10. Cell (2) according to one of claims 1 to 9, **characterized in that** it includes an inerting system (56) able to propel an inert gas (58) into the passageway (6), and/or securing means (18) for the engine (4) located in a securing area (16) for the engine (4), the inerting system (56) possibly being placed in said area (16).

11. Cell (2) according to one of claims 1 to 10, **characterized in that** it is a test cell (2) for a turbojet or turboprop, intended to drive an air flow (14) passing through the passageway (6), the shutter (38; 40) being able to be moved out of the closed position by the airflow (14) when the airflow (14) is greater than a threshold S, and/or the shutter (38; 40) is configured so as to be in the closed position when the flow (14) is lower than or equal to the threshold S.

12. Cell (2) according to one of claims 1 to 11, **characterized in that** the shutter (38; 40) includes a pivot link (50), which is off-centre relative to said shutter (38; 40); preferably in the closed position, the shutter (38; 40) has an upper half and a lower half, the pivot (50) being placed at the upper half.

13. Method for extinguishing a fire in a test cell (2) for an engine (4), in particular for a turbojet or turboprop, the method comprising the following steps:
(a) performance (100) of an engine (4) test in the test cell (2);
(b) detection (102) of a fire;
**characterized in that** the cell (2) includes a shutter (38; 40) pivoting between an open position and a closed position;
the method furthermore comprises a step
(d) pivoting (106) of the shutter (38; 40) towards the closed position in an energetically autonomous manner, the test cell (2) being possibly according to any one of claims 1 to 12.

14. Method according to claim 13, **characterized in that** the engine (4) is an aircraft turbojet or turboprop, and **in that**, following step (b) detection (102), the engine (4) is shut down; and during step (d) pivoting (106), the engine (4) continues to turn so as to drive an air flow (14) that holds the shutter (38; 40) partially open.

15. Method according to one of claims 13 to 14, **characterized in that** during step (d) pivoting, the shutter (38; 40) remains partially open for at least 1 second, preferably for at least 5 seconds, more preferably at least 20 seconds, possibly for at least 1 minute.
